# EUROPÄISCHE PATENTANMELDUNG

(11) **EP 2 705 776 A1**
(43) Veröffentlichungstag der Anmeldung: **12.03.2014**
(21) Anmeldenummer: 13004365.6
(22) Anmeldetag: 06.09.2013
(51) Int. Cl.: A47B 96/20, F16B 5/00, F16B 12/18

(54) **Verbundplattenverbindungssystem für Schnittflächen von Verbundplattenzuschnitten**

(30) Priorität: 09.09.2012 DE 102012017774
(71) Anmelder: Josef Wann GmbH, 89269 Vöhringen (DE)
(72) Erfinder: Wann, Rudolf, D-89269 Vöhringen (DE)

(57) **Zusammenfassung**

Die Erfindung betrifft ein Verbundplattenverbindungssystem (1) für Schnittflächen (2, 3) von Verbundplattenzuschnitten (4, 5) mit mindestens einer ersten und einer zweiten Verbundplatte (6, 7) mit jeweils einer mediendichten Abdeckung (8, 9) aus Abdeckmaterial und jeweils einer medienempfindlichen Kernplatte (10, 11) auf deren Oberseite (12, 13) die jeweilige mediendichte Abdeckung (8, 9) angeordnet ist. Dazu weist ein erster Verbundplattenzuschnitt (4) der ersten Verbundplatte (6) mindestens eine erste Schnittfläche (2) und ein zweiter Verbundplattenzuschnitt (5) der zweiten Verbundplatte (7) mindestens eine zweite Schnittfläche (3) auf. Die erste und die zweite Schnittflächen (2, 3) des ersten und des zweiten Verbundplattenzuschnitts (4, 5) sind einander zugewandt und weisen in einem unteren Randbereich (14) der jeweiligen Kernplatte (10, 11) Zuganker (16, 17, 18) auf, welche die Schnittflächen (2, 3) zusammenpressen. Jede Schnittfläche (2, 3) weist jeweils eine Hohlkehle (20, 21) auf, die in dem jeweiligen Material der Kernplatte (10, 11) angeordnet ist. Die jeweiligen Hohlkehlen (20, 21) begrenzen die aufeinander gepressten Schnittflächen (2, 3) auf eine obere und eine untere Randzone (22, 23) der Schnittflächen (2, 3) der Verbundplattenzuschnitte (4, 5).

## Beschreibung

Die Erfindung betrifft ein Verbundplattenverbindungssystem für Schnittflächen von Verbundplattenzuschnitten mit mindestens einer ersten und einer zweiten Verbundplatte mit jeweils einer mediendichten Abdeckung aus Abdeckmaterial und jeweils einer medienempfindlichen Kernplatte auf deren Oberseite die jeweilige mediendichte Abdeckung angeordnet ist.

Das Verbinden von Verbundplatten zu größeren Arbeitsflächen aus Verbundplattenzuschnitten, die den räumlichen Gegebenheiten und innenarchitektonisch unterschiedlichen Designanforderungen gewachsen ist, wird zunehmend schwieriger, weil üblicherweise derartige Verbundplattenzuschnitte mithilfe von Zugankern ausgerichtet werden, die an der Unterseite der Verbundplattenzuschnitte in einem Kernmaterial von medienempfindlichen Kernplatten der Verbundplatten eingebracht sind, wobei die Kernplatten zunehmend aus minderwertigerem Kernmaterial hergestellt und kostengünstig angeboten werden. Dieses Kernmaterial erschwert bei herkömmlichen Zugankerkonstruktionen der üblichen Verbundplattenverbindungssysteme eine präzise Ausrichtung der miteinander zu verbindenden Schnittflächen, zumal das minderwertige Kernmaterial in einen Mittenbereich der Schnittflächen ungleichmäßig ausfranst, eine erhöhte Menge von gelockerten Spänen auf der Schnittfläche zurücklässt und somit die Nachbearbeitungszeit der Schnittflächen beispielsweise mittels Feinschleifverfahren kostenintensiv erhöht.

Aufgabe der Erfindung ist es, ein verbessertes Verbundplattenverbindungssystem für Schnittflächen von Verbundplattenzuschnitten zu schaffen, das geeignet ist Verbundplattenzuschnitte aus Kernmaterial und Abdeckmaterial mit minderwertigem Kernmaterial zuverlässig und präzise zu verbinden.

Gelöst wird die Aufgabe mit dem Gegenstand des unabhängigen Anspruchs 1. Vorteilhafte Weiterbildungen der Erfindung ergeben sich aus den abhängigen Ansprüchen.

Erfindungsgemäß wird ein Verbundplattenverbindungssystem für Schnittflächen von Verbundplattenzuschnitten mit mindestens einer ersten und einer zweiten Verbundplatte mit jeweils einer mediendichten Abdeckung aus Abdeckmaterial und jeweils einer medienempfindlichen Kernplatte auf deren Oberseite die jeweilige mediendichte Abdeckung angeordnet ist, geschaffen. Dazu weist ein erster Verbundplattenzuschnitt der ersten Verbundplatte mindestens eine erste Schnittfläche und ein zweiter Verbundplattenzuschnitt der zweiten Verbundplatte mindestens eine zweite Schnittfläche auf. Die erste und die zweite Schnittfläche des ersten und des zweiten Verbundplattenzuschnitts sind einander zugewandt und weisen in einem unteren Randbereich der jeweiligen Kernplatte Zuganker auf, welche die Schnittflächen zusammenpressen. Jede Schnittfläche weist jeweils eine Hohlkehle auf, die in dem jeweiligen Material der Kernplatte angeordnet ist. Die jeweiligen Hohlkehlen begrenzen die aufeinander gepressten Schnittflächen auf eine obere und eine untere Randzone der Schnittflächen der Verbundplattenzuschnitte.

Ein derartiges Verbundplattenverbindungssystem hat den Vorteil, dass nur noch die Randzonen der Schnittflächen der Verbundplattenzuschnitte aufeinander liegen, die eine qualitativ höhere Dichte aufweisen als die Mittenbereiche der Kernplatte. Dieses liegt teilweise am Herstellungsprozess von Faserverbundplatten für die Kernplatte und auch teilweise am Einbringen von Partikeln mit geringerem spezifischen Gewicht als Holz, wie beispielsweise am Einbringen von Styroporpartikeln in einem Mittenbereich der Kernplatte. Trotz der minderwertigeren Kernplatten einer solchen Verbundplatte können mithilfe des erfindungsgemäßen Verbundplattenverbindungssystems Verbundplattenzuschnitte präzise mit ihren Schnittflächen aufeinander bei hoher gemeinsamer Stabilität verbunden werden.

Ein weiterer Vorteil des erfindungsgemäßen Verbundplattenverbindungssystems, bei dem Hohlkehlen in Mittenbereichen der miteinander zu verbindenden Schnittflächen vorgesehen werden, besteht darin, dass derartige Hohlkehlenbereiche deutlich preiswerter herstellbar sind als die gesamte Dicke der Verbundplatte im Bereich der Schnittflächen durch entsprechendes Feinschleifen auf ein präzises Zusammenfügen der Schnittflächen vorzubereiten. Fertigungskosten können dadurch in erheblichem Umfang eingespart werden, da nun lediglich obere und untere Randzonen der Schnittflächen präzise vorzubereiten sind und nicht mehr die Gesamtstärke der Kernplatte präzise auf das Endmaß geschliffen werden muss.

Somit ermöglicht das erfindungsgemäße neue Verbundplattenverbindungssystem auch für herkömmliche hochwertige Verbundplattenmaterialien eine deutliche Kostenreduzierung, da mit höherer Vorschubgeschwindigkeit als beim Feinschliffprozess die Hohlkehlen zwischen der oberen Randzone und der unteren Randzone eingefräst werden können. Von besonderem Vorteil ist es dabei, dass bei einer Ausführungsform das Kernmaterial der Kernplatten in der oberen und der unteren Randzone eine höhere Dichte aufweist, als in dem Bereich der Hohlkehlen der aufeinander zupressenden Schnittflächen.

Weiterhin ist es vorgesehen, dass die Schnittflächen in der oberen Randzone einen auf die obere Randzone begrenzten Kantenschutz aufweisen, und wobei die Hohlkehle außermittig angeordnet ist, so dass die untere Randzone eine größere Auflagefläche aufweist, als die mit mindestens einem Abdeckmaterial der mediendichten Abdeckung versehene obere Randzone.

Wenn der Kantenschutz nicht nur auf das Abdeckmaterial der mediendichten Abdeckung beschränkt ist, sondern vielmehr durch ein Hinterschneiden des Kernmaterials entlang der Rückseite der Abdeckung mit anschließendem Auffüllen der Hinterschneidung durch eine Kunststoffschicht verbunden ist, so kann die Verschiebung der Hohlkehle in Richtung auf die obere Randzone hin in vorteilhafter Weise weiter vergrößert werden.

Das Verbundplattenverbindungssystem kann weiter verbessert werden, mittels einer weiteren Ausführungsform der Erfindung, indem das Kernmaterial der Kernplatten im Bereich der Zuganker statt Quernuten nun Querbohrungen in dem Kernmaterial zur Aufnahme von Langschäften der Zuganker quer zu den Schnittflächen aufweist. Durch das Vorsehen von Querbohrungen quer zu den Schnittflächen und quer zu den Hohlkehlen, um dort die Langschäfte der Zuganker unterzubringen, steht für das Anziehen der Zuganker ein den Langschaft umgebendes Kernmaterial zur Verfügung, was bisher durch das vorsehen einer von der Unterseite der Kernplatte eingebrachte Montagenut in diesen Randbereichen der Schnittflächen mit einer Schwächung des Kernmaterials verbunden war.

Zusätzlich können die Enden der Querbohrungen zu der Schnittfläche hin jeweils einen Kunststoffblock aufweisen, der in das Kernmaterial eingegossen oder eingelassen ist und zur Schnittfläche hin das gleiche Profil mit Hohlkehle aufweist wie die Schnittfläche selbst.Von besonderem Vorteil ist dabei, dass das Kunststoffmaterial in das Kernplattenmaterial eingegossen werden kann, um den Kunststoffblock rund um die Querbohrungen in dem porenreichen Kernmaterial zu verankern. Da gerade minderwertiges Kernmaterial mindestens im Bereich der Hohlkehlen äußerst porös ist, kann beim Gießen des Kunststoffblockes der Kunststoff in das poröse Material eindringen und sich dort verankern.

In einer weiteren Ausführungsform ist es vorgesehen, dass die Kunststoffblöcke einen trapezförmigen Querschnitt in Richtung der Querbohrungen aufweisen, der sich zu den Schnittflächen hin verjüngt. Dadurch sind praktisch die Kunststoffblöcke verkeilt im Kernmaterial im Bereich der Endungen der Querbohrungen angeordnet und verbessern die Wirkung der Zuganker insbesondere bei minderwertiger Qualität des Kernmaterials.

Durch das Vorsehen von Querbohrungen anstelle von herkömmlichen Quernuten für das Einlegen der Zuganker kann das Einbringen der Zuganker in die Querbohrungen dieses neuen Verbundplattenverbindungssystems ein Problem darstellen, wenn es aus Raum- und Platzgründen nicht möglich ist, die beiden Verbundplattenzuschnitte mit ihren vorbereiteten Schnittflächen und den vorbereiteten Queröffnungen, mit beispielsweise einseitig eingelegten Langschäfte mit beidseitigen Gewindeansätzen aufeinander zu zubewegen, um das erfindungsgemäße Verbundplattenverbindungssystem zu montieren.

Um dieses Problem zu lösen ist es vorgesehen, dass das Kernmaterial eine der beiden zu fügenden Kernplatten anschließend an die Querbohrungen der Montageöffnungen zum Anbringen von Zugspangen und Muttern in Verlängerung der Querbohrungen und Montageöffnungen zusätzliche Montagenuten einer Länge aufweist, die ausreichend ist, um Langschrauben einzulegen und anschließend in die Queröffnungen einzuschieben. Dazu sind die Längen der Montagenuten den Längen der Langschäfte der Zuganker angepasst.

Um ein Fügen der aufeinander zu pressenden Verbundplattenzuschnitte zu gewährleisten, reicht ein einzelner Zuganker nicht aus. Vielmehr sind mehrere Zuganker auf der Schnittfläche verteilt in Abständen angeordnet, wobei das Abstandsmaß für ein Unterbauen einer maximalen Anzahl verschiedenartiger Unterbauten unter den Verbundplattenzuschnitten optimiert ist. Zu dieser Optimierung sind eine Vielzahl von unterschiedlichen Rastermaßen der Unterbauten wie Unterschränke, Unterherde, Unterwaschmaschinen, Unterspülmaschinen, Unterkühlschränke usw. untersucht worden, um die Zuganker mit ihren Abstandsmaßen an Stellen vorzusehen, die für die Unterbauten relativ unkritisch sind. Dabei hat sich für Standardverbundplatten einer Breite von 60 cm für das erfindungsgemäße Verbundplattenverbindungssystem bewährt, dass mindestens drei Zuganker in einem äquidistanten Abstandsmaß vorgesehen werden.

In einer weiteren Ausführungsform der Erfindung weisen die zwei Verbundplatten auf ihren Schnittflächen Gehrungsschnittflächen auf, die unter einem Gehrungswinkel zu den Außenrändern einer Verbundplatte entsprechende Gehrungsschnittflächen ausbilden. Die Gehrungsschnittflächen gehen von den Vorderkanten der Verbundplattenzuschnitte aus. Nach Überwindung der Vorderkanten gehen die Gehrungsschnittflächen in langgestreckte Schwanenhalsformen über. Diese langgestreckten Schwanenhalsformen ermöglichen eine verbesserte Ausnutzung des Verbundplattenmaterials für Einbaukomponenten wie Spülbecken, Abtropfbecken oder ähnlichem und erhöhen die Stabilität des für das Einbauteil aufgeschnittenen Verbundplattenzuschnitts, wie es in nachfolgenden Figuren näher erläutert wird. Weiterhin ist es für das neue Verbundplattenverbindungssystem vorgesehen, dass die Verbundplattenzuschnitte mit ihren Hohlkehlen aufweisenden Schnittflächen aneinander stoßend angeordnet sind und die erste Schnittfläche der ersten Verbundplatte mehrere Teilnuten im Bereich der Hohlkehle mit eingefügten Federelementen aufweist. Die gegenüber liegende zweite Schnittfläche der zweiten Verbundplatte weist hingegen eine langgestreckte Passnut entlang der Hohlkehle auf. In dieser langgestreckten Passnut können die Federelemente längsverschieblich gleitend für ein passgenaues Anstoßen der beiden Verbundplatten aneinander angeordnet werden.

Dabei ist von besonderer Bedeutung, dass die langgestreckte Passnut noch vor einer hinteren Randseite der zweiten Verbundplatte endet, so dass die hintere Randseite unversehrt und ungeschwächt in voller Kernplattenstärke mit durchgängiger Hohlkehle erhalten bleibt. Dieses hat besondere Vorteile für den Transport und die Zwischenlagerung, da durchgehende langgestreckte Passnuten, die sich bis zu den hinteren Randseiten der Verbundplatten erstrecken, weniger robust sind, zumal das Material in diesen Bereichen besonders gefährdet ist und jede Schwächung, wie es beispielsweise eine langgestreckte Nut mit der Passnut dargestellt, zu Bruchverlust oder Aufquellverlusten bei Lagerung und Transport der vorgefertigten Verbundplattenzuschnitte führen kann.

Die Erfindung wird nun anhand der beigefügten Figuren näher erläutert.
- Figur 1: zeigt eine schematische perspektivische Ansicht eines Verbundplattenverbindungssystems gemäß einer ersten Ausführungsform der Erfindung mit Hohlkehlen in Schnittflächen;
- Figur 2: zeigt eine schematische, perspektivische Querschnittsansicht durch das Verbundplattenverbindungssystem gemäß Figur 1 entlang eines Zugankers und quer zu den Hohlkehlen der Schnittflächen;
- Figur 3: zeigt eine schematische perspektivische Ansicht eines Verbundplattenverbindungssystems gemäß einer zweiten Ausführungsform der Erfindung mit Nut-Federverbindungselementen in den Hohlkehlen der Schnittflächen;
- Figur 4: zeigt eine schematische, perspektivische Querschnittsansicht durch das Verbundplattenverbindungssystem gemäß Figur 3 quer durch eines der der Nut- Federverbindungselemente der Schnittflächen;
- Figur 5: zeigt eine schematische perspektivische Ansicht eines Verbundplattenverbindungssystems mit einem mediendichten Kantenschutz gemäß einer dritten Ausführungsform der Erfindung;
- Figur 6: zeigt eine schematische, perspektivische Querschnittsansicht durch das Verbundplattenverbindungssystem gemäß Figur 5 quer zu den Hohlkehlen und entlang eines Zugankers sowie quer zu dem mediendichten Kantenschutz;
- Figur 7: zeigt einen schematische perspektivische Untersicht auf eine Zugankerkonstruktion für die Verbundplattenverbindungssysteme gemäß den vorhergehenden Ausführungsformen;
- Figur 8: zeigt eine schematische perspektivische Unteransicht auf ein Verbundplattenverbindungssystem gemäß einer weiteren Ausführungsform der Erfindung mit einem zusätzlichen Kunststoffblock;
- Figur 9: zeigt eine schematische Draufsicht auf eine Arbeitsplatte aus Verbundplattenzuschnitten mit Gehrungsschnittflächen und langgezogener Schwanenhalsform;
- Figur 10: zeigt einen schematischen vergrößerten Ausschnitt der langgezogenen Schwanenhalsform;
- Figur 11: zeigt eine schematische, perspektivische Querschnittsansicht quer zu den Hohlkehlen durch ein Verbundplattenverbindungssystem entlang eines Zugankers gemäß einer weiteren Ausführungsform der Erfindung.

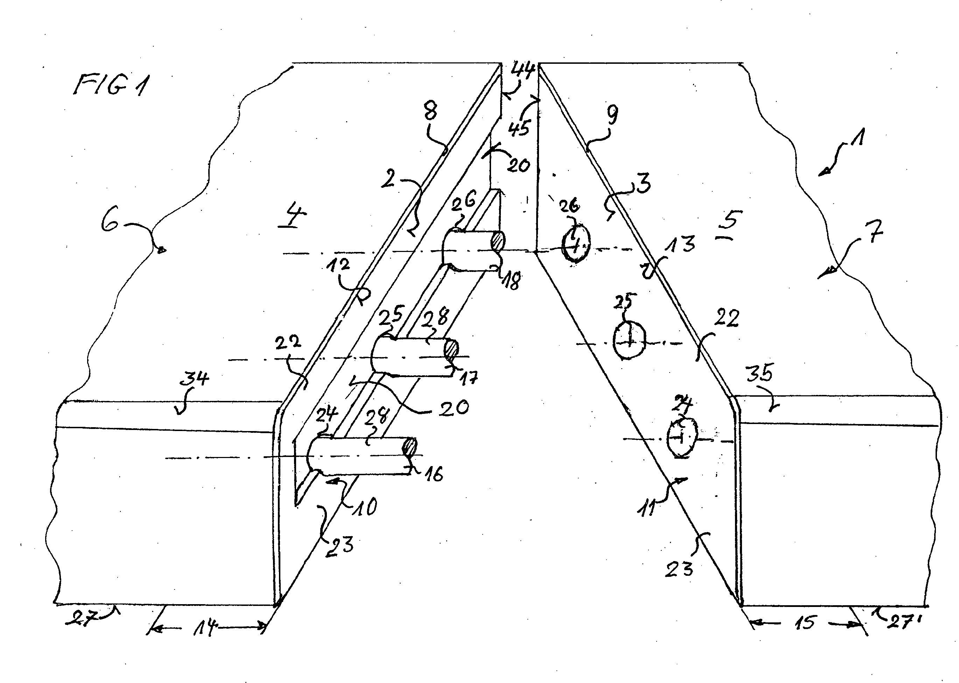

Figur 1 zeigt eine schematische perspektivische Ansicht eines Verbundplattenverbindungssystems 1 gemäß einer ersten Ausführungsform der Erfindung mit Hohlkehlen 20 und 21 in Schnittflächen 2 und 3. Das Verbundplattenverbindungssystem 1 ist in Figur 1 auseinandergezogen dargestellt und sieht Schnittflächen 2 und 3 vor, wie sie in Figur 1 schematisch und perspektivisch zu sehen sind, wobei die Dimensionen von Verbundplattenzuschnitte 4 und 5 zur besseren Darstellung der Schnittfläche 2 und 3 verzerrt und nicht maßstabsgerecht abgebildet sind. Diese Schnittflächen 2 und 3 sind an den Verbundplattenzuschnitten 4 bzw. 5 angebracht, um ein präzises Zusammenführen bzw. Zusammenpressen mithilfe des Verbundplattenverbindungssystems 1 zu ermöglichen.

Dazu weist ein erster Verbundplattenzuschnitt 4 eine erste Schnittfläche 2 aus einer vorgefertigten Verbundplatte 6 auf und ein zweiter Zuschnitt 5 weist eine zweite Schnittfläche 3 einer zweiten vorgefertigten Verbundplatte 7 auf. Zur Verbesserung der Darstellung der einzelnen Komponenten, die das Verbundplattenverbindungssystem 1 bilden, werden die beiden Schnittflächen 2 und 3 auseinander gezogen, so dass Einzelheiten des neuen Verbundplattenverbindungssystems deutlicher dargestellt werden können.

Die erste und die zweite Verbundplatte 6 und 7 weisen jeweils eine mediendichte Abdeckung 8 bzw. 9 auf, die in dieser Ausführungsform aus einem Schichtpressstoff als Abdeckmaterial einen mediendichten Abschluss der Oberseite 12 und 13 einer medienempfindlichen Kernplatte 10 bzw. 11 bilden. Bei diesem Verbundplattenverbindungssystem 1 kann das Kernplattenmaterial zumindest im zentralen Volumenbereich ein minderwertigeres Kernmaterial als in Randzonen 22 und 23 der Schnittflächen 2 bzw. 3 aufweisen, so das sich beispielsweise das Kernmaterial zu einer oberen Randzone 8 und einer unteren Randzone 9 hin zunehmend verdichtet.

In Randbereichen 14 bzw. 15 der jeweiligen Kernplatte 10 bzw. 11 sind Zuganker 16, 17 und 18 in Querbohrungen 24, 25 und 26 quer zu der ersten Hohlkehle 20 der ersten Schnittfläche 2 und Querbohrungen 24', 25' und 26' quer zu der zweiten Hohlkehle 21 der zweiten Schnittfläche 3 angeordnet, die jeweils einen Langschaft 28 der Zuganker 16, 17 und 18 aufnehmen. Derartige Querbohrungen 24, 25 und 26 bzw. 24', 25' und 26' haben gegenüber den Nuten, in die bisher die Zuganker 16, 17 und 18 von den Unterseiten 27 und 27' aus eingelegt wurden, den Vorteil, dass das Kernmaterial nicht geschwächt wird, so dass auch Kernmaterialien minderer Qualität für die Kernplatte 10 bzw. 11 im Bereich der Zuganker 16, 17 und 18 eingesetzt werden können.

Um eine präzise Flächenpassung zu gewährleisten, weist jede Schnittfäche 2 bzw. 3 eine Hohlkehle 20 bzw. 21 auf, die in das Material der Kernplatten 10 bzw. 11 eingearbeitet sind, und eine untere Randzone 22 und eine obere Randzone 23 auf jeder der Schnittflächen 2 und 3 stehen zu lassen. Die Randzonen 22 und 23 können angeschliffen werden, um ein präzises aufeinander Pressen der fein geschliffenen oberen und unteren Randzonen 22 und 23 der Schnittflächen 2 und 3 bei diesem Verbundplattenverbindungssystem 1 zu ermöglichen.

Dazu zeigt Figur 1 deutlich, dass die untere Randzone 23, zu der keine Abdeckung gehört, breiter ausgelegt ist und somit eine größere Auflagefläche bietet als die obere Randzone 23, die aufgrund der Schnittflächen der Abdeckungen 8 und 9 gegenüber der unteren Randzone 23 stabiler ist und deshalb schmaler ausgelegt werden kann, um ein Abkippen des ersten Verbundplattenzuschnitts 4 gegenüber dem zweiten Verbundplattenzuschnitts 5 beim Zusammenbau der Verbundplattenzuschnitte zu einer Arbeitsplatte mithilfe des erfindungsgemäßen Verbundplattenverbindungssystems 1 zu vermeiden. Die Hohlkehle 20 bzw. 21 ist folglich asymmetrisch bzw. außermittig in Bezug auf ein Querschnittsprofil einer Schnittfläche 2 bzw. 3 angeordnet.

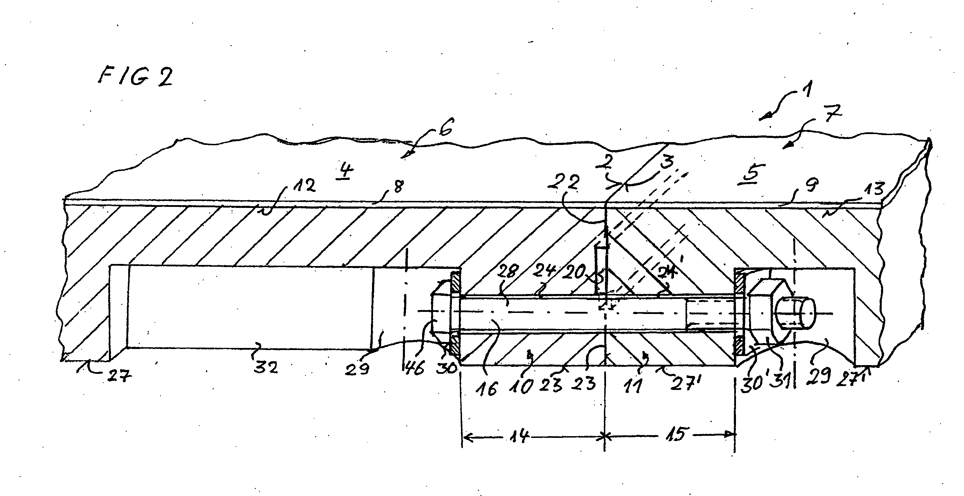

Figur 2 zeigt eine schematische, perspektivische Querschnittsansicht durch das Verbundplattenverbindungssystem 1 gemäß Figur 1 entlang eines Zugankers 16 und quer zu den Hohlkehlen 20 und 21 der Schnittflächen 2 und 3. Im Bereich des Zugankers 16, der quer zu den Schnittflächen 2 und 3 ausgerichtet ist und mithilfe einer Langschraube mit einem Langschaft 28 sowie einem Langschraubenkopf 46 und einer Gegenmutter 31 die Schnittflächen 2 und 3 zusammenzieht, bildet sicjh ein Druck auf das Kernmaterial aus. Dieser Druck durch den Zuganker auf das Kernmaterial der Kernplatten 10 bzw. 11 wird durch Zugspangen 30 und 30' auf einen vergrößerten Bereich des Kernmaterials im Bereich entsprechend angepasster Montageöffnungen 29 der Kernplatten 10 bzw. 11 großflächig übertragen.

Um eine derartige Langschraube mit Langschraubenkopf 46 und Langschaft 28 in die entsprechenden Querbohrungen 24 zu den Schnittflächen 2 und 3 einzubringen, ist in dieser Ausführungsform der Erfindung eine zusätzliche Montagenut 32 in der ersten Kernplatte 10 in Verlängerung der Montageöffnung 29 vorgesehen. Von dieser Montagenut 32 aus kann eine derartige Langschraube aus Langschraubenkopf 46 und Langschaft 28 über die Montageöffnung 29 in die Querbohrungen 24 des Kernmaterials des ersten Verbindungsplattenzuschnitts 4 und des zweiten Verbindungsplattenzuschnitts 5 eingeschoben werden.

Somit wird das neue Verbundplattenverbindungssystem 1 im Wesentlichen durch die Hohlkehlen gekennzeichnet, die sowohl für die Herstellungskosten als auch in Bezug auf die Materialkosten eine größtmögliche Kosteneinsparung durch das erfindungsgemäße Verbundplattenverbindungssystem 1 ermöglichen, zumal die Oberflächen der Hohlkehlen keinerlei Feinbearbeitung erfordern und von dem gesamten Querschnitt der Schnittflächen lediglich die oberen und unteren Randzonen 22 bzw. 23 einen Feinschliff erfordern.

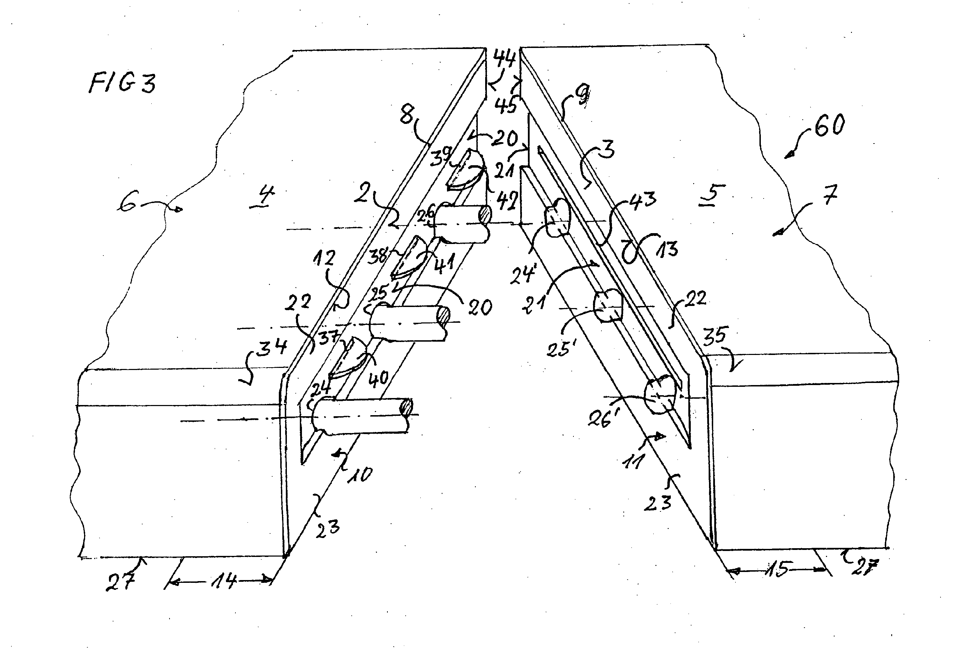

Figur 3 zeigt eine schematische perspektivische Ansicht eines Verbundplattenverbindungssystems 60 gemäß einer zweiten Ausführungsform der Erfindung mit Nut-Federverbindungselementen in den Hohlkehlen 20 und 21 der Schnittflächen 2 und 3. Komponenten mit gleichen Funktionen wie in Figur 1 werden mit gleichen Bezugszeichen gekennzeichnet und nicht extra erörtert.

Das Verbundplattenverbindungssystem 60 unterscheidet sich von dem Verbundplattenverbindungssystem 1 der ersten Ausführungsform dadurch, dass eine präzise Zusammenführung der Schnittflächen 2 und 3 durch Feder-Nut-Verbindungen unterstützt wird. Dazu werden in die erste Schnittfläche 2 des ersten Grundplattenzuschnitts 4 beispielsweise auf drei Positionen begrenzte und verteilte Teilnuten 37, 38 und 39 eingearbeitet. In diesen Teilnuten 37, 38 und 39 sind Federelemente 40, 41 und 42 angeordnet. Diese Federelemente können beispielsweise eine elliptische Außenkontur aufweisen, die eine Einführen in eine Passnut erleichtert. Während die erste Schnittfläche 2 nur auf kurze Abschnitte im Bereich der Hohlkehle 20 begrenzte Teilnuten 37, 38 und 39 aufweist, in welche die Federelemente 40, 41 und 42 eingepasst sind, ist auf der gegenüberliegenden zweiten Schnittfläche 3 des zweiten Grundplattenzuschnitts 5 eine langgestreckte Passnut 43 vorgesehen, deren Lage innerhalb der Hohlkehle 21 der Lage der Teilnuten 37, 38 und 39 bzw. der Federelemente 40, 41 und 42 in der Hohlkehle 20 der ersten Schnittfläche 2 entspricht. Damit ist beim Zusammenfügen der Schnittflächen 2 und 3 eine hohe Präzision durch diese zweite Ausführungsform des Verbundplattenverbindungssystems 60 möglich.

Die langgestreckte Passnut 43 endet noch vor der hinteren Randseite 45 des zweiten Verbundplattenzuschnitts 5, um die hintere Randseite 45 mechanisch zu stabilisieren und nicht zu schwächen, so dass sowohl die hintere Randseite 44 des ersten Verbundplattenzuschnitts 4 als auch die hintere Randseite 45 des zweiten Verbundplattenzuschnitts 5 lediglich Hohlkehlen 20 bzw. 21 aufweisen, und keine tief in das Kernmaterial eindringende Passnut mit der die Gefahr des Aufquellens oder Brechens bei Zwischenlagerungen und Transporten der Arbeitsplattenzuschnitte 4 bzw. 5 verbunden ist. Im Gegensatz zu der Tiefe der Passnut liegt die Tiefe der Hohlkehlen im Bereich zwischen Submillimetern und wenigen Millimetern, so dass die vorgesehenen Hohlkehlen 20 und 21 das Kernmaterial nicht nachhaltig schwächen und bis zu den hinteren Randseiten 44 und 45 eingefräst werden können, wie es die Figuren 1, 3 und 5 zeigen.

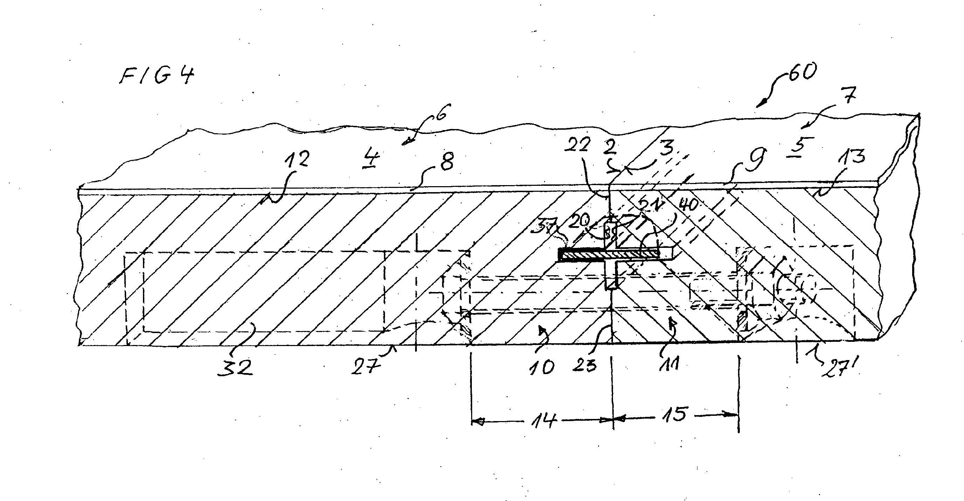

Figur 4 zeigt eine schematische, perspektivische Querschnittsansicht durch das Verbundplattenverbindungssystem 60 gemäß Figur 3 quer durch eines der Nut-Federverbindungselemente der Schnittflächen 2 und 3 im Bereich einer Teilnut 37 mit dem Federelement 40. Alle weiteren Bezugszeichen entsprechen in ihrer Bedeutung den Bezugszeichen der Figur 2, wobei in diesem Querschnitt kein Zuganker zu sehen ist. Dabei ist die Teilnut 37 in die Hohlkehle 20 der ersten Schnittfläche 2 derart eingearbeitet, dass sie der Größe eines beispielsweise ellipsenförmigen Federelements 40 entspricht, so dass vor einem Fügen der Verbundplattenzuschnitte 4 und 5 zu einer Arbeitsplatte das Federelement 40 des Verbundplattenverbindungssystems 60 in die Teilnut 37 eingelegt und stoffschlüssig mit dem Kernmaterial der Kernplatte 10 verbunden werden kann.

Der aus der Teilnut 37 herausragende Teil des in der Teilnut 37 fixierten Federelements 40 des Verbundplattenverbindungssystem 60 ermöglicht ein präzises horizontales Ausrichten der zu fügenden Verbundplattenzuschnitte 4 und 5, indem der aus der ersten Hohlkehle 20 herausragende Teil des Federelements 40 in eine gegenüberliegende langgestreckte Passnut 43 in der zweiten Hohlkehle 21 der zweiten Schnittfläche 3 eingepasst wird. Aufgrund der langgestreckten Passnut des Verbundplattenverbindungssystem 60 ist eine präzise Ausrichtung der in Figur 3 gezeigten Vorderkanten 34 und 35 der beiden Verbundplattenzuschnitte 4 und 5 zueinander ungehindert möglich.

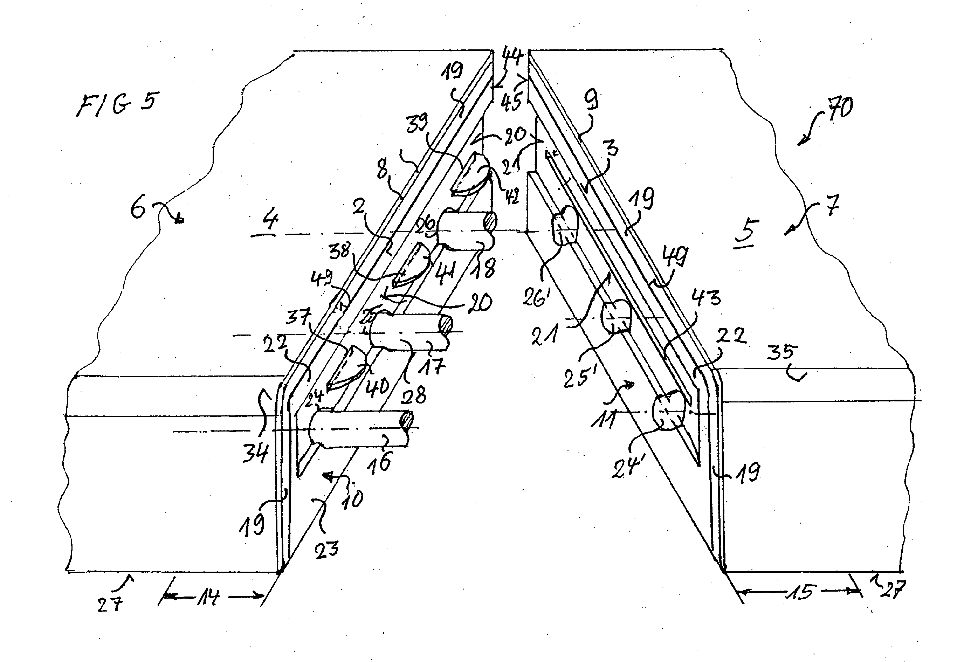

Figur 5 zeigt eine schematische perspektivische Ansicht eines Verbundplattenverbindungssystems 70 mit einem mediendichten Kantenschutz 19 gemäß einer dritten Ausführungsform der Erfindung, wobei in dieser Ausführungsform der Erfindung der zusätzliche mediendichte Kantenschutz 19 in den oberen Randzonen 22 und an den Vorderkanten der Schnittflächen 2 und 3 vorgesehen ist. Dieser Kantenschutz 19 ist aus Kunststoff und in eine nutförmige Aussparung direkt unterhalb der Abdeckungen 8 und 9 in den oberen Randzonen 22 sowie und an den Vorderkanten der Schnittflächen 2 und 3 vorgesehen. Dazu kann die Nutform im Querschnitt quadratisch, rechteckig, trapezförmig oder dreieckig sein, entscheidend ist nur, dass damit die Auflageflächen der mit den Schnittflächen 2 und 3 durchtrennten Abdeckungen 8 und 9 der beiden Verbundplattenzuschnitte 4 und 5 deutlich vergrößert wird und die Sicherheit vor dem Eindringen von Medien in die Verbundplattenverbindungsstelle oder in das medienempfindliche Kernmaterial der Kernplatten 10 und 11 verbessert wird. Außerdem wird die Kantenstabilität der Abdeckungen 8 und 9 verbessert, so dass Lagerung und Transport der Verbundplattenzuschnitte 4 und 5 zum Montageort erleichtert werden können.

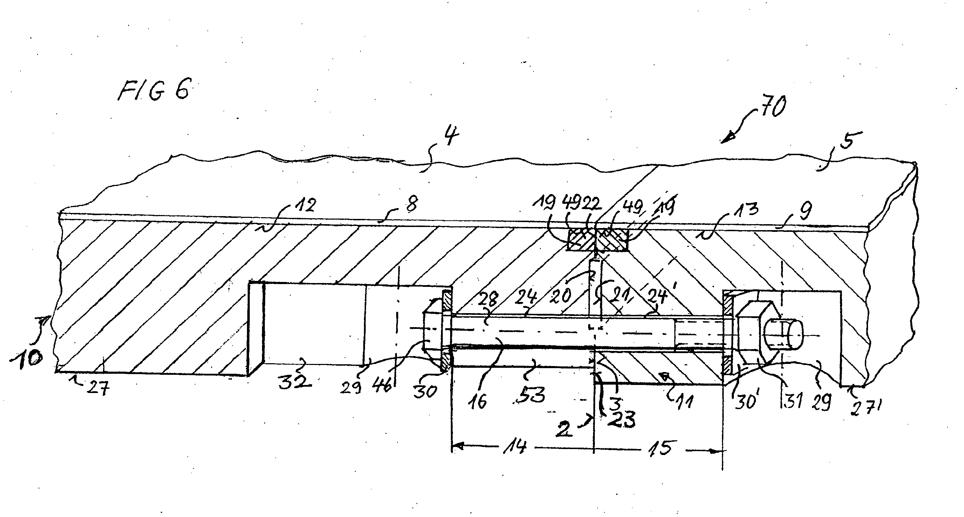

Figur 6 zeigt eine schematische, perspektivische Querschnittsansicht durch das Verbundplattenverbindungssystem 70 gemäß Figur 5 quer zu den Hohlkehlen 20 und 21 und entlang eines Zugankers 16 sowie quer zu dem mediendichten Kantenschutz 19. Dieser schematische Querschnitt entspricht im Wesentlichen dem Querschnitt von Figur 4 und zeigt jedoch zusätzlich das Profil des Kantenschutzes 19, das hier rechteckig ausgebildet ist, aber jederzeit auch ein rechtwinkliges Dreiecksprofil oder ein asymmetrisches Trapezprofil aufweisen kann. Entscheidend ist lediglich, dass dieser Kantenschutz 19 bis zu einer Unterseite 49 der jeweiligen Abdeckung 8 bzw. 9 herangeführt wird und mediendicht mit dieser Unterseite 49 im Bereich des Kantenschutzes verbunden ist, was durch ein gießtechnisches Verfahren des Kunststoffes des Kantenschutzes 19 erreicht wird.

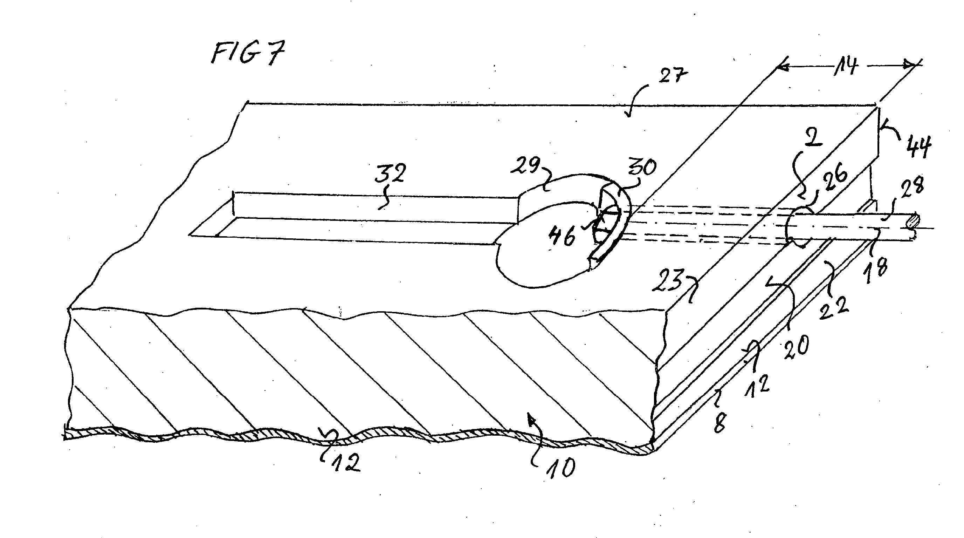

Figur 7 zeigt eine schematische perspektivische Untersicht auf eine Zugankerkonstruktion eines Zugankers 18 für die Verbundplattenverbindungssysteme 1, 60 und 70 gemäß den vorhergehenden Ausführungsformen. Um die Darstellung gemäß Figur 7 zu vereinfachen, wird nur ein vergrößerter Abschnitt des ersten der beiden Verbundplattenzuschnitte 4 perspektivisch von seiner Unterseite 27 aus gezeigt. Wie deutlich zu erkennen ist, wird zum Einführen des Langschaftes 28 dieser Langschraube mit dem Langschraubenkopf 46 und dem Langschaft 28 in die Montagenut 32 eingelegt und über die Montageöffnung 29, die für die Zugspange 30 und den Kopf 46 der Langschraube vorgesehen ist, in die Queröffnung 26 eingeführt, um den Zuganker 18 in Position zu bringen. Diese Struktur ist in die Kernplatte 10 eingearbeitet und bedeutet gegenüber herkömmlichen Lösungen eine Verbesserung der Robustheit, da auf eine Montagenut im Randbereich 14 der Schnittfläche 2 verzichtet wird.

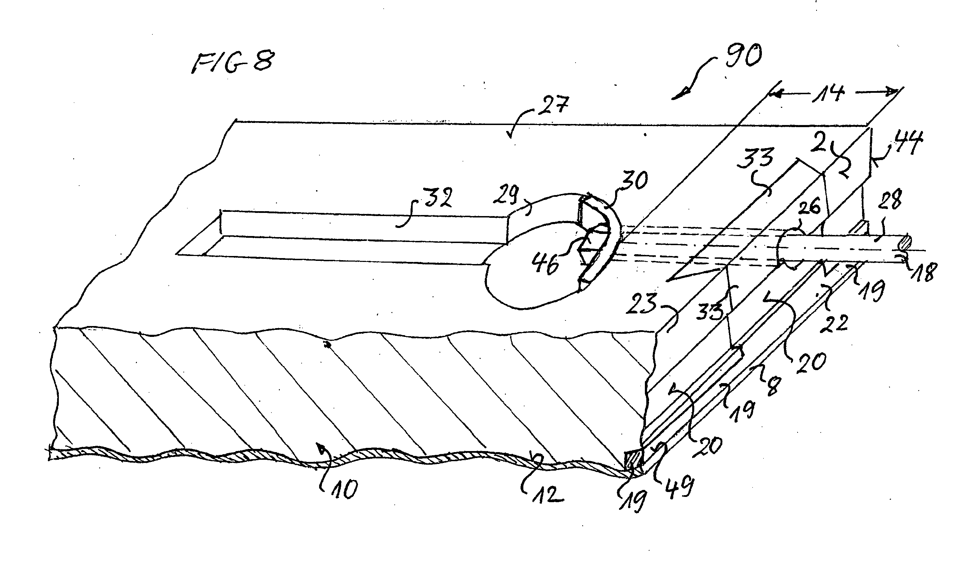

Figur 8 zeigt eine schematische perspektivische Unteransicht auf ein Verbundplattenverbindungssystem 80 gemäß einer weiteren Ausführungsform der Erfindung mit einem zusätzlichen Kunststoffblock 33, der das Ende der Querbohrung 26 zur Schnittfläche 2 hin bildet und das Ende der Querbohrung 26 vollständig umgibt, so dass der Bereich des Kunststoffblock 33 in dem Kernmaterial der Kernplatte 10 zusätzlich als Angusstrichter bei der Herstellung des Kantenschutzes 19, wie er in den Figuren 5 und 6 gezeigt wird dienen kann.

Beim Ausfräsen der Hohlkehle 20 aus dem Schnittflächenbereich nimmt auch der Kunststoffblock dieses Hohlkehlenprofil an. Durch das Gießen des Kunststoffblockes 33 ist dieser in dem Kernmaterial der Kernplatte 10 vollständig verankert. Diese Verankerung kann jedoch durch einen trapezförmigen Querschnitt, wie Figur 8 zeigt, mechanisch verstärkt werden, indem sich das Profil des Kunststoffblockes in Richtung auf die Schnittfläche 2 zu verjüngt.

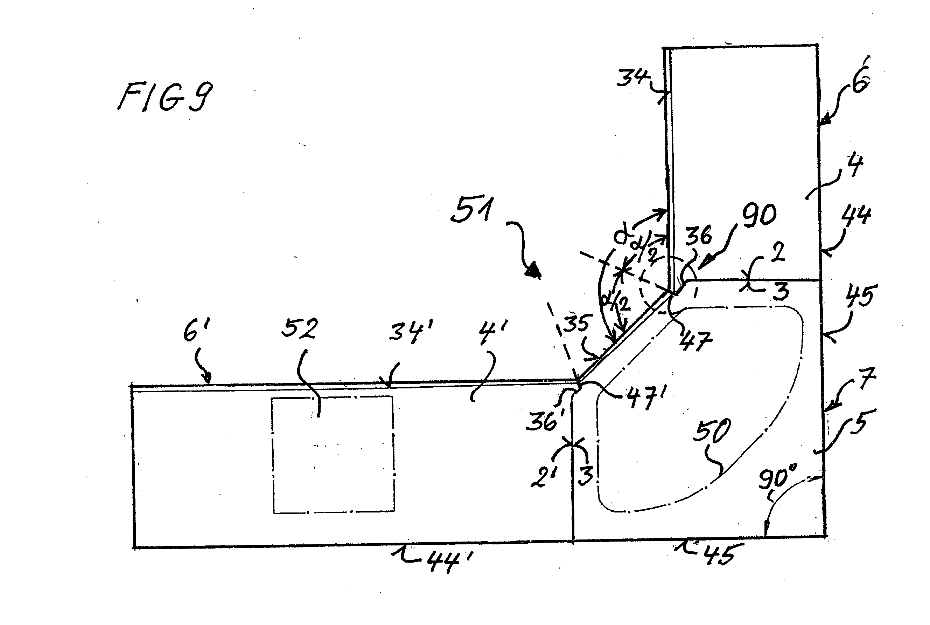

Figur 9 zeigt eine schematische Draufsicht auf eine Arbeitsplatte aus mehreren Verbundplattenzuschnitten 4, 4' und 5 zu einer an die räumlichen Gegebenheiten angepassten L-förmigen Arbeitsplatte 51 mit Gehrungsschnittflächen 47 im Bereich von Vorderkanten 34, 34' und 35 und langgezogener Schwanenhalsform 36 und 36'. Diese langgezogene Schwanenhalsform 36 und 36' sind ein Merkmal eines Verbundplattenverbindungssystems 90 gemäß einer weiteren Ausführungsform der Erfindung. Aufgrund der langgezogenen Schwanenhalsform 36 und 36' ist es möglich, einen breiteren Randstreifen 48 zum Halten eines Einbauteils 50, wie beispielsweise einer Spüle, deren Kontur hier mit punkt-gestrichelten Linien markiert ist, vorzusehen.

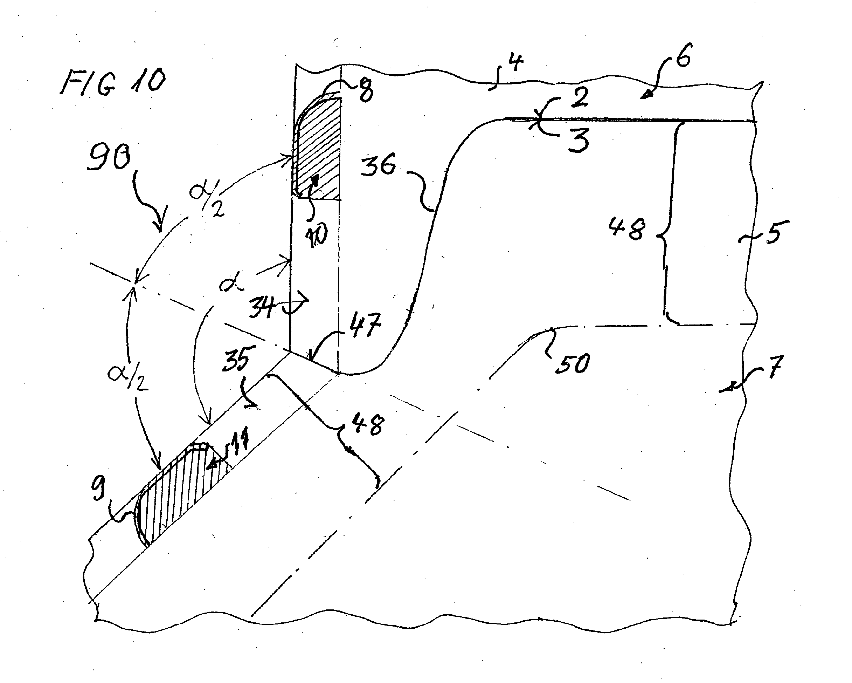

Figur 10 zeigt einen schematischen vergrößerten Ausschnitt der langgezogenen Schwanenhalsform 36, wobei mit diesem Ausschnitt verdeutlicht wird, dass in Abhängigkeit von des Längenstreckung Δl ein breiterer Randstreifen 48 zur Halterung eines Einbauteils 50 zur Verfügung gestellt werden kann oder ein größeres Einbauteil in dem Verbundplattenzuschnitt 5 angeordnet werden kann. Außerdem wird durch die Ausführungsform des Verbundplattenverbindungssystems 90 der Materialverschnitt bei derartigen L-förmigen Arbeitsplatten minimiert. Zusätzlich ist beispielsweise ein Keramikkochfeld in dem Verbundplattenzuschnitt 4' der Figur 9 beispielhaft als weiteres Einbauteil in der Arbeitsplatte 51 vorgesehen.

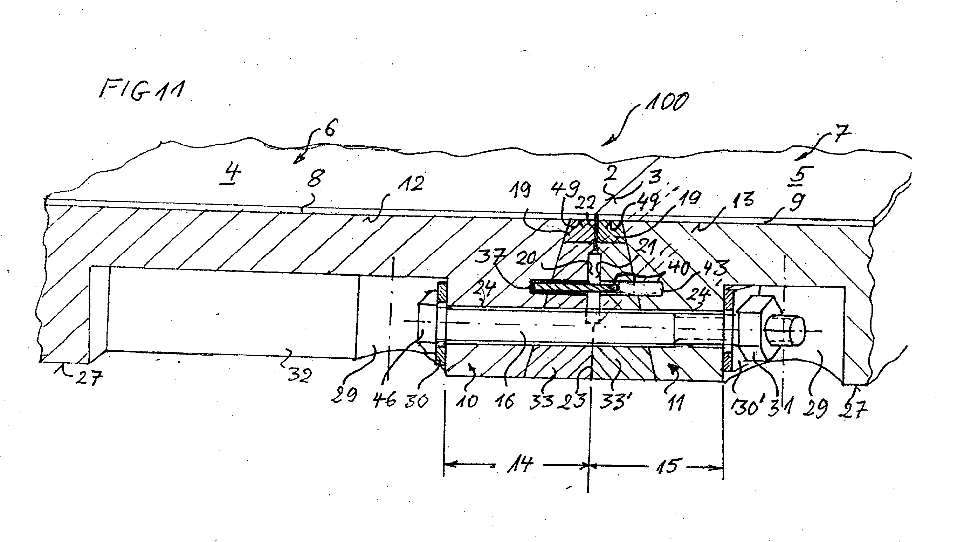

Figur 11 zeigt eine schematische, perspektivische Querschnittsansicht quer zu den Hohlkehlen 20 und 21 durch ein Verbundplattenverbindungssystem 100 entlang eines Zugankers 16 gemäß einer weiteren Ausführungsform der Erfindung, wobei mit diesem Querschnitt verdeutlicht wird, dass sämtliche der vorher diskutierten Ausführungsformen in dieser weiteren Ausführungsform vereinigt sind und jede Schnittfläche 2 und 3 im Bereich der Enden der Querbohrungen 24 und 24' jeweils einen Kunststoffblock 33 und 33' aufweisen. Durch die Kunststoffblöcke wird eine Verstärkung von minderwertigem Kernmaterial im Bereich des Zugankers 16 erreicht.

Durch den hier gezeigten trapezförmigen Querschnitt der Kunststoffblöcke 33 und 33' kann eine direkte Verbindung zu dem vorgesehenen Kantenschutz 19 geschaffen werden, so dass von den Unterseiten 27 und 27' der Verbundplattenzuschnitte 4 und 5 ausgehend trichterförmige Angussöffnungen für ein gleichzeitiges Gießen des Kunststoffes für die Kunststoffblöcke 33 in den Bereichen der Queröffnungen 24 und dem sich längserstreckenden Kantenschutz 19 zur Verfügung stehen.

Obwohl zumindest eine beispielhafte Ausführungsform in der vorhergehenden Beschreibung gezeigt wurde, können verschiedene Änderungen und Modifikationen vorgenommen werden. Die genannten Ausführungsformen sind lediglich Beispiele und nicht dazu vorgesehen, den Gültigkeitsbereich, die Anwendbarkeit oder die Konfiguration in irgendeiner Weise zu beschränken. Vielmehr stellt die vorhergehende Beschreibung dem Fachmann einen Plan zur Umsetzung zumindest einer beispielhaften Ausführungsform zur Verfügung, wobei zahlreiche Änderungen in der Funktion und der Anordnung von in einer beispielhaften Ausführungsform beschriebenen Elementen gemacht werden können, ohne den Schutzbereich der angefügten Ansprüche und ihrer rechtlichen Äquivalente zu verlassen.

### Bezugszeichenliste

- 1: Verbundplattenverbindungssystem
- 2, 2': erste Schnittfläche
- 3, 3': zweite Schnittfläche
- 4, 4': erster Verbundplattenzuschnitt
- 5: zweiter Verbundplattenzuschnitt
- 6, 6': erste Verbundplatte
- 7: zweite Verbundplatte
- 8: mediendichte Abdeckung
- 9: mediendichte Abdeckung
- 10: Kernplatte
- 11: Kernplatte
- 12: Oberseite
- 13: Oberseite
- 14: unterer Randbereich
- 15: unterer Randbereich
- 16: Zuganker
- 17: Zuganker
- 18: Zuganker
- 19: Kantenschutz
- 20: Hohlkehle
- 21: Hohlkehle
- 22: obere Randzone
- 23: untere Randzone
- 24, 24': Querbohrung
- 25, 25': Querbohrung
- 26, 26': Querbohrung
- 27, 27': Unterseite
- 28: Langschaft
- 29, 29': Montageöffnung
- 30, 30': Zugspange
- 31: Mutter
- 32: Montagenut
- 33, 33': Kunststoffblock
- 34: Vorderkante
- 35: Vorderkante
- 36, 36': Schwanenhalsform
- 37: Teilnut
- 38: Teilnut
- 39: Teilnut
- 40: Federelement
- 41: Federelement
- 42: Federelement
- 43: langgestreckte Passnut
- 44: hintere Randseite
- 45: hintere Randseite
- 46: Langschraubenkopf
- 47, 47': Gehrungsfläche
- 48: Randstreifen
- 49: Unterkante der Abdeckung
- 50: Einbauteil
- 51: Arbeitsplatte
- 52: Keramikkochfeld
- 60: Verbundplattenverbindungssystem (2. Ausführungsform)
- 70: Verbundplattenverbindungssystem (3. Ausführungsform)
- 80: Verbundplattenverbindungssystem (4. Ausführungsform)
- 90: Verbundplattenverbindungssystem (5. Ausführungsform)
- 100: Verbundplattenverbindungssystem (6. Ausführungsform)

## Patentansprüche

1. Verbundplattenverbindungssystem für Schnittflächen (2, 3) von Verbundplattenzuschnitten (4, 5) aufweisend:
- mindestens eine erste und eine zweite Verbundplatte (6, 7) mit jeweils einer mediendichten Abdeckung (8, 9) aus Abdeckmaterial und jeweils einer medienempfindlichen Kernplatte (10, 11) auf deren Oberseite (12, 13) die jeweilige mediendichte Abdeckung (8, 9) angeordnet ist
- einen ersten Verbundplattenzuschnitt (4) der ersten Verbundplatte (6) mit mindestens einer ersten Schnittfläche (2);
- einen zweiten Verbundplattenzuschnitt (5) der zweiten Verbundplatte (7) mit mindestens einer zweiten Schnittfläche (3);
wobei die Schnittflächen (2, 3) des ersten und des zweiten Verbundplattenzuschnitts (4, 5) einander zugewandt angeordnet sind und wobei in einem unteren Randbereich (14, 15) der jeweiligen Kernplatte (10, 11) Zuganker (16, 17, 18) angeordnet sind, welche die Schnittflächen (2, 3) zusammenpressen;
**dadurch gekennzeichnet dass**,
jede Schnittfläche (2, 3) jeweils eine Hohlkehle (20, 21) aufweist, die in dem jeweiligen Material der Kernplatte (10, 11) angeordnet ist, wobei die jeweilige Hohlkehle (20, 21) die aufeinander gepressten Schnittflächen (2, 3) auf eine obere und eine untere Randzone (22, 23) der Schnittflächen (2, 3) der Verbundplattenzuschnitte (4, 5) begrenzen.

2. Verbundplattenverbindungssystem nach Anspruch 1,
**dadurch gekennzeichnet, dass**
das Kernmaterial der Kernplatten (10, 11) in der oberen und der unteren Randzone (22, 23) eine höhere Dichte aufweist, als in dem Bereich der Hohlkehlen (20, 21) der aufeinander gepressten Schnittflächen (2, 3).

3. Verbundplattenverbindungssystem nach Anspruch 1 oder Anspruch 2,
**dadurch gekennzeichnet, dass**
die Schnittflächen (2, 3) in der oberen Randzone (22) einen auf die obere Randzone (22) und Vorderkanten der Schnittflächen (2,3) begrenzten Kantenschutz (19) aufweisen, und wobei die Hohlkehle (20, 21) außermittig angeordnet ist, so dass die untere Randzone (23) eine größere Auflagefläche aufweist, als die mit mindestens einem Abdeckmaterial der mediendichten Abdeckung (8, 9) versehene obere Randzone (22).

4. Verbundplattenverbindungssystem nach Anspruch 3,
**dadurch gekennzeichnet, dass**
das Kernmaterial der Kernplatten (10, 11) im Bereich der Zuganker (16, 17, 18) Querbohrungen (24, 25, 26) in dem Kernmaterial der Kernplatten (10, 11) zur Aufnahme von Langschäften (28) der Zuganker (16, 17, 18) quer zu den Schnittflächen (2, 3) aufweist.

5. Verbundplattenverbindungssystem nach einem der vorhergehenden Ansprüche,
**dadurch gekennzeichnet, dass**
das Kernmaterial der Kernplatten (10, 11) anschließend an die Querbohrungen (24, 25, 26) Montageöffnungen (29) zur Aufnahme von Zugspangen (30) und Muttern (31) und in Verlängerung der Querbohrungen (24, 25, 26) und Montageöffnungen (29) Montagenuten (32) einer Länge aufweist, und wobei die Länge der Montagenuten (32) der Länge der Langschäfte (28) der Zuganker (16, 17, 18) angepasst ist.

6. Verbundplattenverbindungssystem nach einem der vorhergehenden Ansprüche,
**dadurch gekennzeichnet, dass**
mehrere Zuganker (16, 17, 18) auf der Schnittfläche (2, 3) verteilt in Abständen angeordnet sind, wobei das Abstandsmaß für ein Unterbauen einer maximalen Anzahl verschiedenartiger Unterbauten unter den Verbundplattenzuschnitten (4, 5) optimiert ist.

7. Verbundplattenverbindungssystem nach einem der vorhergehenden Ansprüche,
**dadurch gekennzeichnet, dass**
das Kernmaterial der Kernplatten (10, 11) im Bereich der Zuganker (16, 17, , 18) rund um die Querbohrungen (24, 25, 26) jeweils eingegossene oder eingesetzte zu den Schnittflächen (2, 3) ausgerichtete Kunststoffblöcke (33) aufweist, deren Profile zu den aufeinander gepressten Schnittflächen (2, 3) hin den Schnittflächen (2, 3) angepasst sind und gleichförmige Hohlkehlen (20, 21) und obere und untere Randzonen (22, 23) wie die Schnittflächen (2, 3) aufweisen.

8. Verbundplattenverbindungssystem nach einem der vorhergehenden Ansprüche,
**dadurch gekennzeichnet, dass**
die Kunststoffblöcke (33) einen trapezförmigen Querschnitt in Richtung der Querbohrungen (24, 25, 26) aufweisen, der sich zu den Schnittflächen (2, 3) hin verjüngt.

9. Verbundplattenverbindungssystem einem der vorhergehenden Ansprüche,
**dadurch gekennzeichnet, dass**
die zwei Verbundplattenzuschnitte (4, 5) auf ihren Schnittflächen (2, 3) Gehrungsschnittflächen (47, 47') im Bereich von Vorderkanten (34, 35) der Verbundplattenzuschnitte (4, 5) aufweisen, die in langgestreckte Schwanenhalsformen (36, 36') übergehen.

10. Verbundplattenverbindungssystem einem der vorhergehenden Ansprüche,
**dadurch gekennzeichnet, dass**
die Verbundplattenzuschnitte (4, 5) mit ihren Hohlkehlen (20, 21) aufweisenden Schnittflächen (2, 3) aneinander stoßend angeordnet sind und wobei die erste Schnittfläche (2) der ersten Verbundplatte (6) mehrere Teilnuten (37, 38, 39) im Bereich der Hohlkehle (10, 11) mit eingefügten Federelementen (40, 41, 42) aufweist und die zweite Schnittfläche (3) der zweiten Verbundplatte (7) eine langgestreckte Passnut (43) entlang der Hohlkehle (21) aufweist, in welcher die Federelemente (40, 41, 42) längsverschieblich gleitend für ein passgenaues Anstoßen der beiden Verbundplatten (6, 7) aneinander angeordnet sind.

11. Verbundplattenverbindungssystem nach einem der vorhergehenden Ansprüche,
**dadurch gekennzeichnet, dass**
die langgestreckte Passnut (43) noch vor einer hinteren Randseite (45) der zweiten Verbundplatte (7) endet, so dass die hintere Randseite (45) unversehrt und ungeschwächt in voller Kernplattenstärke mit durchgängiger Hohlkehle (21) erhalten bleibt.
